# EUROPÄISCHE PATENTSCHRIFT

(11) **EP 0 964 806 B1**
(45) Veröffentlichungstag und Bekanntmachung des Hinweises auf die Patenterteilung: **12.06.2002**
(21) Anmeldenummer: 98913611.4
(22) Anmeldetag: 28.02.1998
(51) Int. Cl.: B60T 13/66, B60T 7/04

(54) **ELEKTRISCH GESTEUERTES BREMSSYSTEM FÜR EIN RADFAHRZEUG**
ELECTRICALLY CONTROLLED BRAKING SYSTEM FOR A WHEELED VEHICLE
SYSTEME DE FREINAGE ELECTRIQUE POUR VEHICULE A ROUES

(30) Priorität: 05.03.1997 DE 19708832
(43) Veröffentlichungstag der Anmeldung: 22.12.1999
(73) Patentinhaber: Mannesmann Rexroth AG, 97816 Lohr am Main (DE)
(72) Erfinder: MIES, Hubertus, D-97816 Lohr (DE)
(86) Internationale Anmeldenummer: EP9801141
(87) Internationale Veröffentlichungsnummer: WO9839189

(56) Entgegenhaltungen:
- EP-A- 0 207 275
- EP-A- 0 234 290
- EP-A- 0 268 045
- EP-A- 0 389 416
- EP-A- 0 780 276
- DE-A- 4 107 330
- DE-A- 19 510 522

## Beschreibung

Die Erfindung geht aus von einem für ein Radfahrzeug vorgesehenes, elektrisch gesteuerten Bremssystem, das die Merkmale aus dem Oberbegriff des Anspruchs 1 aufweist.

Ein solches Bremssystem ist aus der US-PS 4,802,562, Figur 9 bekannt. Wie üblich sind dort die Eingabemittel durch ein Bremspedal realisiert, das von einem Fahrzeugführer entsprechend der von ihm gewünschten Abbremsung eines Fahrzeugs niedergedrückt wird. Dem Bremspedal sind zwei Sensoren zugeordnet, die z.B. als Drehpotentiometer ausgebildet sein können. Jeder Sensor erfaßt das Maß der Betätigung des Bremspedals und gibt ein diesem.Maß entsprechendes elektrisches Ausgangssignal ab. Bei dem bekannten Bremssystem sind desweiteren zwei unabhängig voneinander arbeitende elektronische Steuereinheiten vorgesehen, wobei der einen Steuereinheit das Ausgangssignal des einen Sensors und der anderen Steuereinheit das Ausgangssignal des anderen Sensors am Bremspedal als Eingangssignal zugeführt wird. Jedem Rad des Fahrzeugs ist ein Bremszylinder und ein Bremsdruckmodulierventil zugeordnet, das fluidisch mit dem Bremszylinder verbunden ist und ein elektrisches Betätigungselement, nämlich einen Piezoaktuator aufweist. Die zwei elektrischen Betätigungselemente von zwei Bremsdruckmodulierventilen sind nur von der einen Steuereinheit und die zwei Betätigungselemente von zwei anderen Bremsdruckmodulierventilen nur von der anderen Steuereinheit ansteuerbar. Beim Ausfall einer Steuereinheit funktionieren also nur noch zwei Bremsdruckmodulierventile.

Aus der DE 31 44 961 A1 ist ein Bremssystem für ein Radfahrzeug bekannt, bei dem durch eine Betätigung eines Bremspedals ein pneumatisches oder hydraulisches Vorsteuerventil sowie ein Winkelgeber verstellt werden. Ein Bremsdruckmodulierventil ist einerseits pneumatisch oder hydraulisch durch einen vom Vorsteuerventil eingesteuerten Druck oder durch einen Elektromagneten verstellbar, der entsprechend der Stellung des Winkelgebers angesteuert wird. Bei diesem Bremssystem kann bei einem Ausfall eines Steuerkreises das Bremsdruckmodulierventil noch mithilfe des anderen Steuerkreises betätigt werden.

Der Erfindung liegt die Aufgabe zugrunde, ein elektrisch gesteuertes Bremssystem mit den Merkmalen aus dem Oberbegriff des Anspruchs 1 so weiterzuentwickeln, daß die Sicherheit erhöht ist.

Bei einem elektrisch gesteuerten Bremssystem mit den Merkmalen aus dem Oberbegriff des Anspruchs 1 wird dieses Ziel dadurch erreicht, daß gemäß dem kennzeichnenden Teil des Anspruchs 1 das Bremsdruckmodulierventil ein bei einer Ansteuerung gleichsinnig wie das erste elektrische Betätigungselement wirkendes, zweites elektrisches Betätigungselement aufweist und daß das zweite elektrische Betätigungselement von der zweiten elektronischen Steuereinheit zur gleichen Zeit wie das erste elektrische Betätigungselement von der ersten elektronischen Einheit ansteuerbar ist.

Während also bei dem Bremssystem nach der US-PS 4,802,562 jedes Bremsdruckmodulierventil nur über eine der beiden Steuereinheiten ansteuerbar ist, geschieht dies bei einem erfindungsgemäßen Bremssystem von jeder der beiden Steuereinheiten. Bei einer Ausbildung des Bremsdruckmodulierventils als proportional verstellbares Druckregelventil wirken im Normalfall beide elektrische Betätigungselemente gegen eine vom Bremsdruck erzeugte Kraft am Regelkolben des Bremsdruckmodulierventils. Bei Ausfall einer Steuereinheit oder eines elektrischen Betätigungselementes steht somit in einer bestimmten Stellung der Eingabemittel nur noch die halbe Kraft und somit auch nur noch der halbe Bremsdruck zur Verfügung. Es ist jedoch noch an jedem Rad bzw. an jeder Achse eine Abbremsung möglich, wobei der Ausfall eines Betätigungselementes durch eine verstärkte Betätigung der Eingabemittel wenigstens teilweise ausgeglichen werden kann. Ist das Bremsdruckmodulierventil ein Schaltventil, so kann dieses so ausgebildet werden, daß sein bewegliches Ventilglied von jedem elektrischen Betätigungselement auch allein umgeschaltet werden kann. Dann ist bei einem Ausfall eines Betätigungselements in einer bestimmten Stellung der Eingabemittel derselbe Bremsdruck erzeugbar wie bei ordnungsgemäßer Funktion.

Vorteilhafte Ausgestaltungen eines erfindungsgemäßen elektrisch gesteuerten Bremssystems kann man den Unteransprüchen entnehmen.

Gemäß der besonders bevorzugten Ausgestaltung nach Anspruch 2 werden die beiden elektronischen Steuereinheiten getrennt voneinander mit einer elektrischen Spannung versorgt. Damit ist sichergestellt, daß bei einem Ausfall einer Spannungsversorgung eine der beiden Steuereinheiten noch funktioniert.

Insbesondere bei Schwerlastkraftwagen ist es von großem Vorteil, wenn gemäß Anspruch 5 den beiden Steuereinheiten elektrische Signale von Sensoren zuführbar sind, von denen die Achslasten erfaßt werden. Dann können die Bremswirkungen an einer vorderen Achse und an einer hinteren Achse des Fahrzeugs annähernd gemäß der optimalen Bremskraftverteilung aufeinander abgestimmt werden, wobei auch berücksichtigt ist, daß die Räder an der Vorderachse des Fahrzeugs eher blockieren sollen als an der Hinterachse.

Die Achslasten und auch sonstige Fahrzeugparameter werden gemäß Anspruch 6 vorteilhafterweise von zwei Sensoren erfaßt. Das elektrische Ausgangssignal jedes Sensors wird beiden Steuereinheiten zugeführt, so daß beim Ausfall eines Sensors beide Steuereinheiten noch ordnungsgemäß funktionieren. Dabei können die Steuereinheiten die Bremsdruckmodulierventile z.B. gemäß dem Ausgangssignal eines der beiden Sensoren steuern, das den niedrigeren Bremsdruck an einem Rad nach sich zieht.

Eine besonders bevorzugte Ausgestaltung ist im Anspruch 7 enthalten. Nach diesem Anspruch ist eine elektronische Überwachungseinheit vorgesehen, der das elektrische Ausgangssignal eines Sensors zuführbar ist und die ein Alarmsignal auslöst, wenn der Sensor einen Defekt einer Komponente des Bremssystems detektiert oder ein Defekt am Sensor selbst festgestellt wird.

Zwei Ausführungsbeispiele eines erfindungsgemäßen elektrisch gesteuerten Bremssystems sind in den Zeichnungen dargestellt. Anhand dieser Zeichnungen wird die Erfindung nun näher erläutert.

Es zeigen
- Figur 1: das erste Ausführungsbeispiel, bei dem die Bremsdruckmodulierventile als Druckregelventile ausgebildet sind, und
- Figur 2: das zweite Ausführungsbeispiel, bei dem die Bremsdruckmodulierventile Schaltventile sind und der Bremsdruck von zwei Drucksensoren erfaßt wird, deren Ausgangssignale beiden Steuereinheiten zugeführt werden.

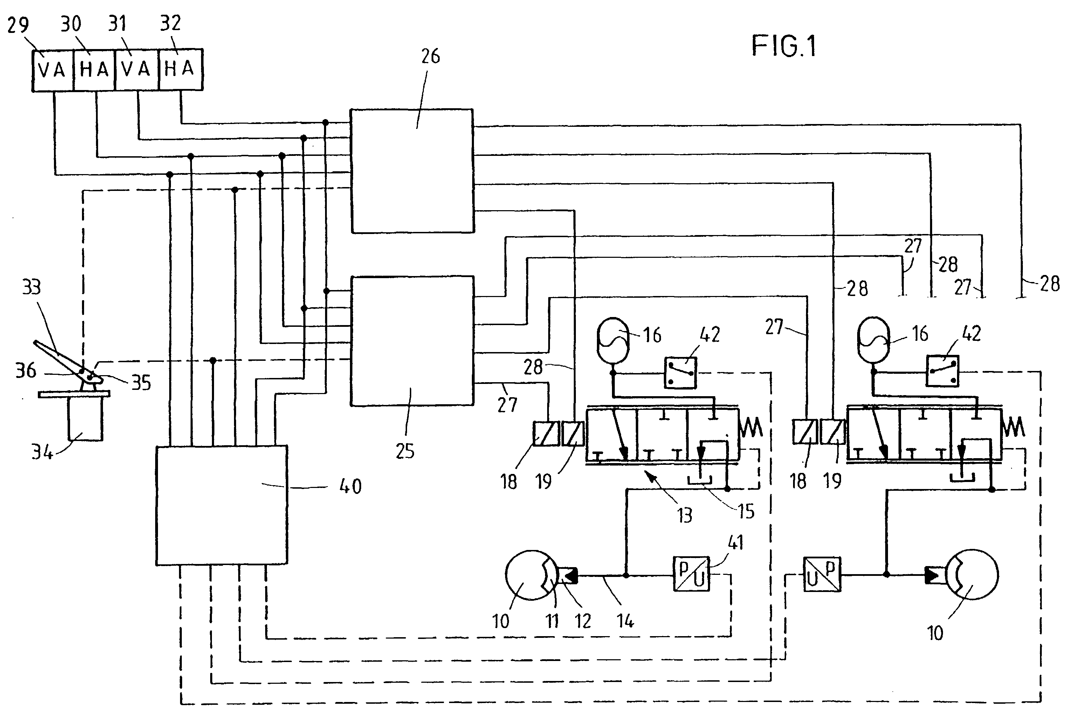

In Figur 1 sind von der Gesamtzahl der an einem Radfahrzeug vorhandenen Bremsscheiben 10 mit Bremsklötzen 11 nur zwei gezeigt, was für das Verständnis vollkommen genügt, weil jedem Rad dieselben Systemkomponenten zugeordnet sind. Die Bremsklötze 11 können von einem Bremszylinder 12 gegen die Bremsscheibe 10 gedrückt werden. Die Kraft, mit der das geschieht, hängt ab vom Bremsdruck, mit dem der Bremszylinder 12 beaufschlagt wird und der von einem Bremsdruckmodulierventil 13 in einer von dessen Verbraucherausgang zum Bremszylinder 12 führende Bremsleitung 14 aufgebaut wird. Das Bremsdruckmodulierventil 13 ist ein proportional verstellbares Druckregelventil, das außer dem Verbraucheranschluß noch einen Rücklaufanschluß, der mit einem Tank 15 verbunden ist, und einen Versorgungsanschluß aufweist, der mit einer Druckmittelquelle 16 verbunden ist, die als Speicher dargestellt ist. Der Regelkolben des Bremsdruckmodulierventils 13 wird im Sinne einer Verbindung des Verbraucheranschlusses mit dem Rücklaufanschluß vom Druck im Verbraucheranschluß und von einer schwachen Druckfeder 17 beaufschlagt. In Gegenrichtung, also im Sinne einer Verbindung des Verbraucheranschlusses mit dem Versorgungsanschluß, kann auf den Regelkolben gemeinsam von zwei axial hintereinander angeordneten Elektromagneten 18 und 19 eine Kraft ausgeübt werden. Die beiden Elektromagnete sind Proportionalmagnete, so daß die von ihnen ausgeübte Kraft von der Höhe des durch sie hindurchfließenden elektrischen Stromes abhängt. In der Bremsleitung 14 stellt sich jeweils ein solcher Bremsdruck ein, daß dieser Bremsdruck zusammen mit der Druckfeder 17 der Kraft der Elektromagnete das Gleichgewicht hält.

Zu einem erfindungsgemäßen elektrisch gesteuerten Bremssystem gehören eine erste elektronische Steuereinheit 25 und eine zweite elektronische Steuereinheit 26, in denen die Ausgangssignale verschiedener Sensoren miteinander verknüpft und daraus Steuersignale für die Elektromagnete 18 und 19 ermittelt werden. Dabei werden die Elektromagnete 18 aller Bremsdruckmodulierventile über getrennte Ausgänge und getrennte Steuerleitungen 27 von der ersten Steuereinheit 25 und die Elektromagnete 19 aller Bremsdruckmodulierventile über getrennte Ausgänge und getrennte Steuerleitungen 28 von der zweiten Steuereinheit 26 angesteuert. Jeder Steuereinheit 25 bzw. 26 wird das elektrische Ausgangssignal eines ersten Sensors 29 und eines zweiten Sensors 31 zugeführt, die beide die Achslast z.B. an einer Vorderachse des mit dem gezeigten Bremssystem ausgestatteten Fahrzeugs erfassen. Zwei weitere Sensoren 30 und 32 erfassen jeweils die Achslast an einer hinteren Achse des Fahrzeugs. Auch die Ausgangssignale dieser beiden Sensoren werden jeder der beiden Steuereinheiten 25 und 26 zugeführt. Diese ziehen z.B. das jeweils niedrigere Ausgangssignal der beiden einer Achse zugeordneten Sensoren zur Ermittlung der für eine gewünschte Verzögerung notwendigen Bremskraft und zur Ermittlung der Bremskraftverteilung zwischen den Achsen heran. Die gewünschte Verzögerung des Fahrzeugs wird vom Fahrzeugführer durch den Verstellweg eines Bremspedals 33 vorgegeben, das somit als Mittel zur Eingabe der gewünschten Abbremsung dient. Das Bremspedal kann gegen die Kraft einer in einem Gehäuse 34 untergebrachte Federanordnung verschwenkt werden, die mit zunehmendem Schwenkwinkel der Verschwenkung eine zunehmende Kraft entgegensetzt und damit gegenüber dem Fahrzeugführer eine Bremskraft simuliert. Der Schwenkwinkel des Bremspedals 33 wird von zwei Winkelgebern 35 und 36 erfaßt, von denen der Winkelgeber 35 sein Ausgangssignal an die Steuereinheit 25 und der Winkelgeber 36 an die Steuereinheit 26 gibt. Abgesehen von etwaigen Toleranzen stellen die Ausgangssignale der Winkelgeber 35 und 36 denselben gewünschten Wert für die Abbremsung des Fahrzeugs dar.

Zusätzlich zu den Steuereinheiten 25 und 26 ist als weitere elektronische Einheit eine Überwachungseinheit 40 vorhanden, der die Ausgangssignale der Lastsensoren 29 bis 32 sowie der beiden Winkelgeber 35 und 36 zugeführt werden. Die Überwachungseinheit 40 vergleicht die Ausgangssignale der beiden Winkelgeber sowie der beiden jeweils einer Achse zugeordneten Lastsensoren miteinander und gibt ein Alarmsignal ab, wenn der Betrag der Differenz zwischen den beiden Ausgangssignalen einen vorgegebenen Wert übersteigt.

An jede Bremsleitung 14 ist ein Drucksensor 41 angeschlossen, dessen Ausgangssignal zur Überwachungsstufe 40 geführt wird. Diese ermittelt ähnlich wie die Steuereinheiten 25 und 26 aus den Ausgangssignalen der Winkelgeber 35 und 36 sowie der Lastsensoren 29 bis 32 den an einem Rad notwendigen Bremsdruck und vergleicht ihn mit dem Wert, den der Drucksensor 41 erfaßt hat. Liegt die Abweichung zwischen dem errechnten Bremsdruck und dem erfaßten Bremsdruck außerhalb eines bestimmten Bandes, so wird von der Überwachungseinheit die Abgabe eines Alarmsignals initiiert. Eine Leistungselektronik, wie sie die Steuereinheiten 25 und 26 zur Ansteuerung der Elektromagnete 18 und 19 benötigen, besitzt die Überwachungseinheit 40 nicht. Der Druck an den Versorgungseingängen der Bremsdruckmodulierventile 13 wird jeweils durch einen Druckschalter 42 überwacht, der anspricht, wenn der Druck am Versorgungseingang eines Bremsdruckmodulierventils 13 einen bestimmten Wert unterschreitet. Das Ansprechen eines Schalters 42 wird an die Überwachungseinheit 40 signalisiert, die auch dann ein Alarmsignal initiiert. Mithilfe der Drucksensoren 41 kann also während eines Bremsvorgangs eine Fehlfunktion einer Steuereinheit eines Bremsdruckmodulierventils, eines Bremszylinders, einer Druckmittelquelle sowie eine Störung in den elektrischen und hydraulischen Verbindungsleitungen zwischen den genannten Komponenten erkannt werden. Der Druckschalter 42 erfaßt darüber hinaus einen Druckabfall am Versorgungseingang eines Ventils 13 auch außerhalb eines Bremsvorgangs.

Das Bremssystem nach Figur 1 ist so ausgelegt, bei maximal zulässigen Achslasten des Fahrzeugs dieses mit einer bestimmten maximalen Verzögerung abbremsen zu können. Die Elektromagnete 18 und 19 der Bremsdruckmodulierventile 13 werden dann von den Steuereinheiten 25 und 26 mit maximalem Strom beaufschlagt. Bei Ausfall eines Elektromagneten 18 oder 19 an einem Bremsdruckmodulierventil können an dem zugeordneten Rad noch maximal 50 % des maximalen Bremsdruckes aufgebaut werden, sofern beide Elektromagnete 18 und 19 eines Ventils 13 gleich ausgebildet sind und jeweils in gleicher Weise angesteuert werden. Es ist jedoch auch denkbar, bei Ausfall eines Elektromagneten den anderen zumindest kurzzeitig mit Überstrom zu beaufschlagen, der rampenartig vermindert wird.

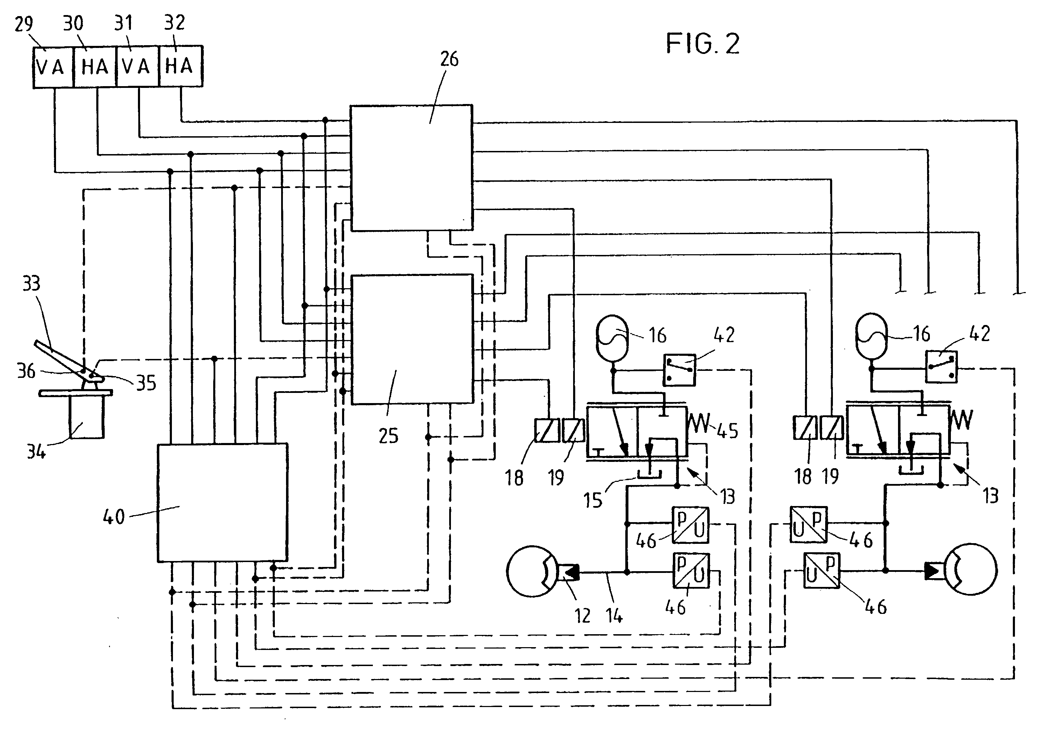

Bei der Ausführung nach Figur 2 ist wiederum ein Bremspedal 33 vorhanden, dem zwei Winkelgeber 35 und 36 sowie ein Simulator 34 für eine Fußkraft zugeordnet sind. Achslastsensoren 29 bis 32 detektieren die von einer Achse getragene Last. Steuereinheiten 25 und 26 steuern Magnete 18 und 19 von Druckmodulierventilen 13 an, die genauso wie die Ventile 13 der Ausführung nach Figur 1 einen Versorgungsanschluß, einen Rücklaufanschluß und einen Verbraucheranschluß aufweisen, der über eine Leitung 14 mit einem Bremszylinder 12 verbunden ist.

Die Ausführung nach Figur 2 unterscheidet sich von derjenigen nach Figur 1 im wesentlichen dadurch, daß die Bremsdruckmodulierventile 13 nun Schaltventile sind, die aufgrund der Kraft einer starken Druckfeder 45 eine Ruhelage einnehmen, in der der Verbraucheranschluß mit dem Tank 15 verbunden ist. Jeder der beiden Elektromagnete 18 und 19 kann das Ventilglied eines Ventils 13 allein oder auch zusammen mit dem anderen Elektromagneten in eine zweite Stellung bringen, in der der Verbraucheranschluß mit dem Versorgungsanschluß verbunden ist. Der Druck in der Bremsleitung 14 wird von zwei Drucksensoren 46 erfaßt, deren Ausgangssignale sowohl der Überwachungseinheit 40 als auch beiden Steuereinheiten 25 und 26 zugeführt werden. Diese Steuereinheiten steuern die Magnete 18 und 19 eines Bremsdruckmodulierventils 13 so an, daß sich in der Bremsleitung 14 ein Druck einstellt, der die über das Bremspedal 33 vorgegebene Abbremsung bewirkt. Dabei sehen die Steuereinheiten 25 und 26 z.B. den niedrigeren der beiden Druckwerte, die von den beiden an einer Bremsleitung 14 angeschlossenen Drucksensoren erfaßt werden, als gegeben an. Die Überwachungseinheit 40 spricht an, wenn der Unterschied in den beiden von den an eine Bremsleitung 14 angeschlossenen Drucksensoren 46 ermittelten Druckwerten eine vorgegebene Größe überschreitet.

Im Unterschied zur Ausführung nach Figur 1 kann bei der Ausführung nach Figur 2 in einer Bremsleitung 14 noch der volle Bremsdruck aufgebracht werden, auch wenn eine der beiden Elektromagnete 18 oder 19 ausfällt. Den jeder Elektromagnet kann alleine das Ventil 13 betätigen.

## Patentansprüche

1. Elektrisch gesteuertes Bremsystem für ein Radfahrzeug mit Eingabemitteln (33), die von einem Fahrzeugführer entsprechend der gewünschten Abbremsung betätigbar sind,
mit zwei unabhängig voneinander arbeitenden elektronischen Steuereinheiten (25, 26), von denen jeder ein dem von einem Sensor (35, 36) erfaßbaren Maß der Betätigung der Eingabemittel (33) entsprechendes elektrisches Signal zuführbar ist,
mit einem einem Rad zugeordneten Bremszylinder (12) und mit einem mit dem Bremszylinder (12) fluidisch verbundenen Bremsdruckmodulierventil (13) mit einem ersten elektrischen Betätigungselement (18, 19), das von einer ersten der beiden Steuereinheiten (25, 26) ansteuerbar ist, **dadurch gekennzeichnet, daß** das Bremsdruckmodulierventil (13) ein bei einer Ansteuerung gleichsinnig wie das erste elektrische Betätigungselement (18, 19) wirkendes, zweites elektrisches Betätigungselement (19, 18) aufweist und daß das zweite elektrische Betätigungselement (19, 18) von der zweiten elektronischen Steuereinheit (26, 25) zur gleichen Zeit wie das erste elektrische Betätigungselement (18, 19) von der ersten elektronischen Steuereinheit (25, 26) ansteuerbar ist.

2. Elektrisch gesteuertes Bremssystem nach Anspruch 1, **dadurch gekennzeichnet, daß** die beiden elektronischen Steuereinheiten (25, 26) getrennt voneinander mit einer elektrischen Spannung versorgt werden.

3. Elektrisch gesteuertes Bremssystem nach Anspruch 1 oder 2, **dadurch gekennzeichnet, daß** den Eingabemitteln (33) zwei Sensoren (35, 36) zur Erfassung des Maßes der Betätigung zugeordnet sind und daß der einen Steuereinheit (25) ein elektrisches Signal des einen Sensors (35) und der anderen Steuereinheit (26) ein elektrisches Signal des anderen Sensors (36) zuführbar ist.

4. Elektrisch gesteuertes Bremssystem nach einem vorhergehenden Anspruch, **dadurch gekennzeichnet, daß** den beiden Steuereinheiten (25, 26) elektrische Signale von Sensoren (29, 30, 31, 32) zuführbar sind, von denen die Größe von veränderbaren Fahrzeugparametern erfaßbar sind.

5. Elektrisch gesteuertes Bremssystem nach Anspruch 4, **dadurch gekennzeichnet, daß** den beiden Steuereinheiten (25, 26) elektrische Signale von Sensoren (29, 30, 31, 32) zuführbar sind, von denen die Achslasten erfaßbar sind.

6. Elektrisch gesteuertes Bremssystem nach Anspruch 4 oder 5, **dadurch gekennzeichnet, daß** derselbe Fahrzeugparameter von zwei Sensoren (29, 30, 31, 32) erfaßbar ist und daß das elektrische Ausgangssignal jedes Sensors (29, 30, 31, 32) beiden Steuereinheiten (25, 26) zuführbar ist.

7. Elektrisch gesteuertes Bremssystem nach einem vorhergehenden Anspruch, **dadurch gekennzeichnet, daß** eine elektronische Überwachungseinheit (40) vorgesehen ist, der das elektrische Ausgangssignal eines Sensors (29, 30, 31, 32, 35, 36, 41, 42, 46) zuführbar ist und die ein Alarmsignal auslöst, wenn ein Defekt einer von dem Sensor überwachten Systemkomponente oder des Sensors selbst festgestellt wird.

8. Elektrisch gesteuertes Bremssystem nach einem vorhergehenden Anspruch, **dadurch gekennzeichnet, daß** das Bremsdruckmodulierventil (13) ein Proportional-Druckregelventil ist.

9. Elektrisch gesteuertes Bremssystem nach einem der Ansprüche 1 bis 8, **dadurch gekennzeichnet, daß** das Bremsdruckmodulierventil (13) ein Schaltventil ist und daß an die fluidische Verbindung (14) zwischen dem Bremsdruckmodulierventil (13) und dem Bremszylinder (12) ein Drucksensor (46) angeschlossen ist, dessen elektrisches Ausgangssignal beiden Steuereinheiten (25, 26) zuführbar ist.

10. Elektrisch gesteuertes Bremssystem nach Anspruch 9, **dadurch gekennzeichnet, daß** an die fluidische Verbindung (14) zwischen dem Bremsdruckmodulierventil (13) und dem Bremszylinder (12) zwei Drucksensoren (46) angeschlossen sind und daß die Ausgangssignale beider Drucksensoren (46) beiden Steuereinheiten (25, 26) zuführbar sind.

## Claims

1. An electrically controlled braking system for a wheeled vehicle with input means (33) which can be actuated by a driver of the vehicle in accordance with the desired braking effect, with two electronic control units (25, 26), which operate independently of each other and each of which can be supplied with an electrical signal corresponding to the extent of actuation of the input means (33), which can be recorded by a sensor (35, 36), with a brake cylinder (12) assigned to a wheel and with a braking pressure modulator valve (13) which is fluid-connected to the brake cylinder (12) and has a first electric actuating element (18, 19), which can be activated by a first of the two control units (25, 26), **characterized in that** the braking pressure modulator valve (13) has a second electric actuating element (19, 18) which acts in the same direction, when activated, as the first electric actuating element (18, 19), and that the second electric actuating element (19, 18) can be activated by the second electronic control unit (26, 25) at the same time as the first electric actuating element (18, 19) is being activated by the first electronic control unit (25, 26).

2. An electrically controlled braking system according to Claim 1, **characterized in that** the two electronic control units (25, 26) are supplied separately with an electric voltage.

3. An electrically controlled braking system according to Claim 1 or 2, **characterized in that** the input means (33) are assigned two sensors (35, 36) for determining the extent of actuation and that one control unit (25) can be supplied with an electrical signal from one sensor (35) and the other control unit (26) can be supplied with an electrical signal from the other sensor (36).

4. An electrically controlled braking system according to any of the preceding claims, **characterized in that** the two control units (25, 26) can be supplied with electrical signals from sensors (29, 30, 31, 32) by means of which the magnitude of variable vehicle parameters can be recorded.

5. An electrically controlled braking system according to Claim 4, **characterized in that** the two control units (25, 26) can be supplied with electrical signals from sensors (29, 30, 31, 32) by means of which the axle loads can be recorded.

6. An electrically controlled braking system according to claim 4 or 5, **characterized in that** the same vehicle parameter can be recorded by two sensors (29, 30, 31, 32) and that the electric output signal of each sensor (29, 30, 31, 32) can be supplied to both control units (25, 26).

7. An electrically controlled braking system according to any of the preceding claims, **characterized in that** an electronic monitoring unit (40) is provided which can be supplied with the electrical output signal of a sensor (29, 30, 31, 32, 35, 36, 41, 42, 46) and which triggers an alarm signal if a defect is detected in one of the system components monitored by the sensor or in the sensor itself.

8. An electrically controlled braking system according to any of the preceding claims, **characterized in that** the braking pressure modulator valve (13) is a proportional pressure-regulating valve.

9. An electrically controlled braking system according to any of Claims 1 to 8, **characterized in that** the braking pressure modulator valve (13) is an on-off valve and that a pressure sensor (46), the electrical output signal of which can be supplied to both control units (25, 26), is connected to the fluid connection (14) between the braking pressure modulator valve (13) and the brake cylinder (12).

10. An electrically controlled braking system according to Claim 9, **characterized in that** two pressure sensors (46) are connected to the fluid connection (14) between the braking pressure modulator valve (13) and the brake cylinder (12) and that the output signals of both pressure sensors (46) can be supplied to both control units (25, 26).

## Revendications

1. Un système de freinage à commande électrique pour un véhicule à roues, doté de moyens (33) d'entrée, qui peuvent être actionnés par un conducteur de véhicule en fonction du degré de freinage souhaité, doté de deux unités (25, 26) de commande électroniques, lesquelles travaillent l'une indépendamment de l'autre et vers chacune desquelles peut être ramené un signal électrique correspondant à une mesure de l'actionnement du moyen (33) d'entrée, pouvant être saisie à l'aide d'un capteur (35, 36), doté d'un vérin (12) de freinage, dédié à une roue, et doté d'une valve (13) de modulation de la pression de freinage, qui est raccordée par voie fluide au vérin (12) de freinage et qui est pourvue d'un premier élément (18, 19) d'actionnement électrique, pouvant être commandé par une première des deux unités (25, 26) de commande, **caractérisé en ce que** la valve (13) de modulation de la pression de freinage présente un second élément (18, 19) d'actionnement électrique, qui fonctionne de la même façon que le premier élément (18, 19) d'actionnement électrique, et que le second élément (18, 19) d'actionnement électrique peut être commandé par la seconde unité (25, 26) de commande électronique en simultané avec la commande par la première unité (25, 26) de commande électronique du premier élément (18, 19) d'actionnement électrique.

2. Un système de freinage à commande électrique conforme à la revendication n° 1, **caractérisé en ce que** les deux unités (25, 26) de commande électronique sont alimentées en tension électrique l'une séparément de l'autre.

3. Un système de freinage à commande électrique conforme à la revendication n° 1 ou n° 2, **caractérisé en ce que** deux capteurs (35, 36), permettant la saisie de la mesure de l'actionnement, sont dédiés aux moyens (33) d'entrée et qu'un signal électrique de l'un des capteurs (35) peut être ramené vers l'une des unités (25) de commande et qu'un signal électrique de l'autre capteur (36) peut être ramené vers l'autre unité (26) de commande.

4. Un système de freinage à commande électrique conforme à une revendication précédente, **caractérisé en ce que** des signaux électriques en provenance de capteurs (29, 30, 31, 32), qui permettent de saisir la valeur de paramètres de véhicule variables, peuvent être ramenés vers les deux unités (25, 26) de commande.

5. Un système de freinage à commande électrique conforme à la revendication n° 4, **caractérisé en ce que** des signaux électriques en provenance de capteurs (29, 30, 31, 32), qui permettent de saisir la charge sur les essieux, peuvent être ramenés vers les deux unités (25, 26) de commande.

6. Un système de freinage à commande électrique conforme à la revendication n° 4 ou n° 5, **caractérisé en ce que** le même paramètre de véhicule peut être saisi par deux capteurs (29, 30, 31, 32) et que le signal de sortie électrique de chacun des capteurs (29, 30, 31, 32) peut être ramené vers les deux unités (25, 26) de commande.

7. Un système de freinage à commande électrique conforme à une des revendications précédentes, **caractérisé en ce qu**'est prévue une unité (40) de surveillance électronique, vers laquelle peut être ramené le signal de sortie électrique d'un capteur (29, 30, 31, 32, 35, 36, 41, 42, 46) et laquelle déclenche un signal d'alarme, lorsqu'est constaté un défaut d'un des composants du système surveillés par le capteur ou un défaut du capteur lui-même.

8. Un système de freinage à commande électrique conforme à une des revendications précédentes, **caractérisé en ce que** la valve (13) de modulation de la pression de freinage est un régulateur de pression à action proportionnelle.

9. Un système de freinage à commande électrique conforme à une des revendications n° 1 à n° 8, **caractérisé en ce que** la valve (13) de modulation de la pression de freinage est une valve de commutation et qu'à la connexion (14) par voie fluide, qui relie la valve (13) de modulation de la pression de freinage et le vérin (12) de freinage, est raccordé un capteur (46) de pression, dont le signal de sortie électrique peut être ramené vers les deux unités (25, 26) de commande.

10. Un système de freinage à commande électrique conforme à la revendication n° 9, **caractérisé en ce que** deux capteurs (46) de pression sont raccordés à la connexion (14) par voie fluide, qui relie la valve (13) de modulation de la pression de freinage et le vérin (12) de freinage, et que les signaux de sortie des deux capteurs (46) de pression peuvent être ramenés vers les deux unités (25, 26) de commande.
